# EUROPEAN PATENT APPLICATION

(11) **EP 4 194 325 A1**
(43) Date of publication of application: **14.06.2023**
(21) Application number: 22212553.6
(22) Date of filing: 09.12.2022
(51) Int. Cl.: B62D 55/30

(54) **SYSTEM AND METHOD FOR BRAKING A TRACK MODULE OF A WORK VEHICLE**

(30) Priority: 10.12.2021 US 202117547445
(71) Applicant: CNH Industrial Italia S.p.A., 10135 Torino (IT)
(72) Inventor: ZURN, Daniel J., Racine, 53404 (US); RESHAD, Jamsheed, Racine, 53404 (US); WEYER, Jason Edward, Racine, 53404 (US)
(74) Representative: CNH Industrial IP Department

(57) **Abstract**

A system (200) for braking a track module (12, 14) of a work vehicle (10) includes a frame (16), a track module (12, 14) supported relative to the frame (16), and a computing system (202). The track module (12, 14) includes an idler wheel (26W, 28W), roller wheels (30W), a track (20) extending in an endless loop around the idler (26W, 28W) and roller wheels (30W), and a tensioning actuator (40) configured to adjust a tension on the track (20). The tensioning actuator (40) increases the tension on the track (20) from a lower tension to a higher tension when a braking operation in association with the track module (12, 14) is initiated and subsequently reduces the tension on the track (20) from the higher tension to the lower tension when the braking operation is ceased.

## Description

### FIELD OF THE INVENTION

The present disclosure relates generally to track-driven work vehicles and, more particularly, to systems and methods for braking a track module of a track-driven work vehicle.

### BACKGROUND OF THE INVENTION

Current work vehicles, such as tractors and other agricultural vehicles, include an electronically controlled engine and a transmission, such as a power shift transmission (PST) or a continuously variable transmission (CVT), coupled to the engine. The transmission is, in turn, coupled to at least one drive axle assembly for transferring torque from the transmission to the vehicle's wheels or tracks. For instance, for a four-wheel drive track-driven vehicle, a drive wheel of each front track assembly is typically rotationally coupled to a front axle assembly of the work vehicle for transferring torque transmitted from the engine to the front track assembly, while a drive wheel of each rear track assembly is typically rotationally coupled to a rear axle assembly of the work vehicle for transferring torque transmitted from the engine to the rear track assembly. As is generally understood, each drive wheel may be configured to rotationally engage a corresponding endless track of the associated track assembly such that rotation of the drive wheel rotates the track, thereby allowing the vehicle to be driven forward or backward.

Each track assembly is typically associated with a suspension system having idler wheels (e.g., front idler wheels and rear idler wheels) and load bearing wheels (e.g., roller wheels) between the front idler wheels and the rear idler wheels. The idler and load bearing wheels roll on the endless track as the work vehicle traverses a field or other driving surface. More particularly, lugs on the track are centered by the idler wheels as the track is driven by the drive wheel. In some suspension system configurations, the front and rear idler wheels are separately movable relative to a frame of the work vehicle and relative to the load bearing wheels such that the idler wheels individually follow the contour of the driving surface. However, in other suspension systems, the front and rear idler wheels are fixed relative to each other. Typically, for both suspension systems, a constant contact patch may be formed between the track and the driving surface, where the contact patch extends from the front idler wheel, across the load bearing wheels, to the rear idler wheel. In both configurations, when a braking-and-steering operation is performed, where the track modules on the side of the vehicle associated with a steering direction are braked to help steer the vehicle in the steering direction (e.g., left-side track modules are braked to help steer the vehicle to the left, or right-side track modules are braked to help steer the vehicle to the right), the lateral force imparted on the track at the idler wheels may cause the idler wheels to "crawl" onto the lugs, which damages the lugs. Different driving surface conditions may also make it more likely for the lugs to be unseated from the idler wheels. For instance, the track may be more likely to be unseated during muddy or wet driving conditions than dry driving conditions. The quicker the lugs are worn out, the more frequently the track needs to be replaced, which increases costs.

Accordingly, an improved system and method for braking a track module of a work vehicle would be welcomed in the technology.

### BRIEF DESCRIPTION OF THE INVENTION

Aspects and advantages of the invention will be set forth in part in the following description, or may be obvious from the description, or may be learned through practice of the invention.

In one aspect, the present subject matter is directed to a system for braking a track module of a work vehicle. The system includes a frame and a track module supported relative to the frame. The track module has an idler wheel assembly including an idler wheel. The track module further has a roller wheel assembly suspended relative to the frame, where the roller wheel assembly includes a plurality of roller wheels. Further, the track module has a track extending in an endless loop around the idler wheel and the plurality of roller wheels. Additionally, the track module has a tensioning actuator configured to adjust a tension on the track. The tensioning actuator increases the tension on the track from a lower tension to a higher tension when a braking operation in association with the track module is initiated and subsequently reduces the tension on the track from the higher tension to the lower tension when the braking operation is ceased.

In another aspect, the present subject matter is directed to a method for braking a track module of a work vehicle. The track module has an idler wheel assembly including an idler wheel. The track module further has a roller wheel assembly including a plurality of roller wheels. Additionally, the track module has a track extending in an endless loop around the idler wheel and the plurality of roller wheels. The method includes determining, with a computing system, that a braking operation is to be performed in association with the track module. Additionally, the method includes controlling, with the computing system, an operation of a tensioning actuator of the track module to increase a tension on the track from a lower tension to a higher tension in response to determining that the braking operation is to be performed.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of one embodiment of a work vehicle in accordance with aspects of the present subject matter;
FIG. 2 illustrates one embodiment of a track module of a work vehicle in accordance with aspects of the present subject matter;
FIGS. 3 and 4 illustrate schematic views of a suspension assembly and a track of the track module shown in FIG. 2 in accordance with aspects of the present subject matter, particularly illustrating the track module when a braking operation is not being performed and when a braking operation is being performed, respectively;
FIG. 5 illustrates a schematic view of another embodiment of a suspension assembly and a track of the track module shown in FIG. 2 in accordance with aspects of the present subject matter;
FIG. 6 illustrates a schematic view of a system for braking a track module of a work vehicle in accordance with aspects of the present subject matter; and
FIG. 7 illustrates a flow diagram of one embodiment of a method for braking a track module of a work vehicle in accordance with aspects of the present subject matter.

Repeat use of reference characters in the present specification and drawings is intended to represent the same or analogous features or elements of the present technology.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

In general, the present subject matter is directed to an improved system and method for braking a track module of a work vehicle. Specifically, the work vehicle includes a frame and a track module supported relative to the frame. The track module includes an idler wheel assembly including an idler wheel. The track module further includes a roller wheel assembly suspended relative to the frame, where the roller wheel assembly includes a plurality of roller wheels. The track module also includes a track extending in an endless loop around the idler and roller wheels. A tensioning actuator is configured to adjust a tension on the track. For instance, when a braking operation in association with the track module is initiated or determined to be performed, the tensioning actuator may increase, or be controlled to increase, the tension on the track from a lower tension to a higher tension. By increasing the tension on the track, the lugs on the track are more resistant to being unseated relative to the idler wheel, which prevents wear on the track. Further, when the front and rear idler wheels are independently supported relative to the frame, increasing the tension on the track may cause the front and/or rear idler wheel to be lifted relative to a driving surface which reduces a surface area of a contact patch between the track and the driving surface. As such, the lateral force imparted on the track at the idler wheel when the track is being braked may be reduced or eliminated, which further prevents the idler wheel from crawling onto lugs of the track and, thus, prevents wear on the track.

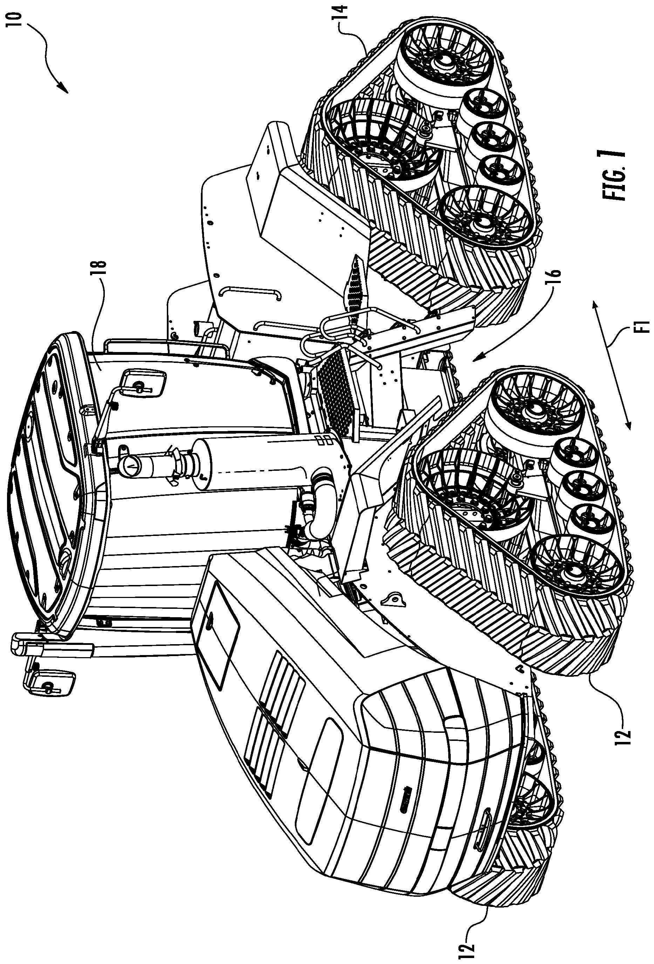

Referring now to the drawings, FIG. 1 illustrates a perspective view of one embodiment of a work vehicle 10. As shown, the work vehicle 10 is configured as an agricultural tractor. However, in other embodiments, the work vehicle 10 may be configured as any other suitable work vehicle known in the art, including those for agricultural and construction applications, transport, sport, and/or the like.

As shown in FIG. 1, the work vehicle 10 includes a pair of front track assemblies 12, a pair or rear track assemblies 14 (only one of which is shown), and a chassis 16 coupled to and supported by the track assemblies 12, 14. Additionally, an enclosed operator's cab 18 is supported by a portion of the chassis 16 and may house various control devices (not shown) for permitting an operator to control the operation of the work vehicle 10.

It should be appreciated that the configuration of the work vehicle 10 described above and shown in FIG. 1 is provided only to place the present subject matter in an exemplary field of use. Thus, it should be apparent that the present subject matter may be readily adaptable to any manner of work vehicle configuration. For example, in an alternative embodiment, the work vehicle 10 may include an open operator's cab 18 and/or may be configured to be operably coupled to any suitable type of work implement, such as a trailer, spray boom, manure tank, feed grinder, plow and/or the like.

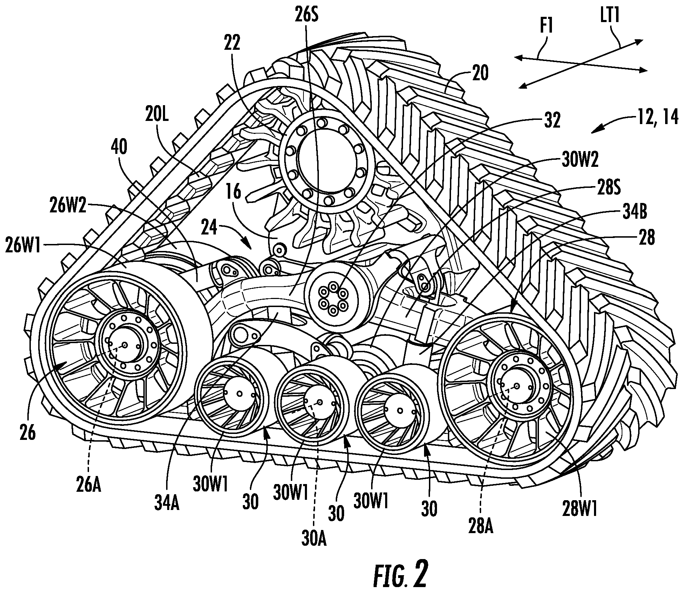

Referring now to FIG. 2, a perspective view of an exemplary embodiment of one of the left-side track assemblies 12, 14 shown in FIG. 1 is illustrated in accordance with aspects of the present subject matter. It should be appreciated that the right-side track assemblies 12, 14 of the work vehicle 10 shown in FIG. 1 mirror the left-side track assemblies 12, 14 shown in FIG. 2. As shown, the track assembly 12, 14 may generally include a track 20, a drive wheel 22 for mechanically engaging the track 20, and a suspension system 24 for supporting the weight of the work vehicle 10 and for damping vibrations and other movement between the track 20 and the vehicle's chassis 16. In one embodiment, the suspension system 24 may include a suspended idler wheel assembly, including a front idler wheel assembly 26 and a rear idler wheel assembly 28, and a plurality of roller wheel assemblies 30 between the idler wheel assemblies 26, 28, where the track 20 wraps in an endless loop around idler wheel and roller wheel assemblies 26, 28, 30. The rear idler wheel assembly 28 is rearward of, and spaced apart from, the front idler wheel assembly 26 along a front-rear direction F1 of the work vehicle 10.

The front idler wheel assembly 26 includes a pair of front idler wheels 26W (e.g., an outboard front idler wheel 26W1 and an inboard front idler wheel 26W2) spaced apart along a lateral direction LT1 and rotatable about a front axis 26A extending parallel to the lateral direction LT1, with the lateral direction LT1 extending perpendicular to the front-rear direction of the work vehicle F 1. Similarly, the rear idler wheel assembly 28 includes a pair of rear idler wheels 28W (e.g., an outboard rear idler wheel 28W1 and an inboard rear idler wheel (not shown)) spaced apart along the lateral direction LT1 and rotatable about a rear axis 28A extending parallel to the lateral direction LT1. Each roller wheel assembly 30 similarly includes a pair of roller wheels 30W (e.g., an outboard roller wheel 30W1 and an inboard roller wheel 30W2) spaced apart along the lateral direction LT1 and rotatable about a roller axis 30A extending parallel to the lateral direction LT1. The track 20 includes lugs 20L along an inner side of the track 20 which are guided or seated laterally between each pair of idler wheels 26W, 28W (e.g., laterally between the inboard and outboard front idler wheels 26W1, 26W2, laterally between the inboard and outboard rear idler wheels 28W1, 28W2), and laterally between each pair of roller wheels 30W (e.g., between the inboard and outboard roller wheels 30W1, 30W2) as the track 20 is driven by the drive wheel 22.

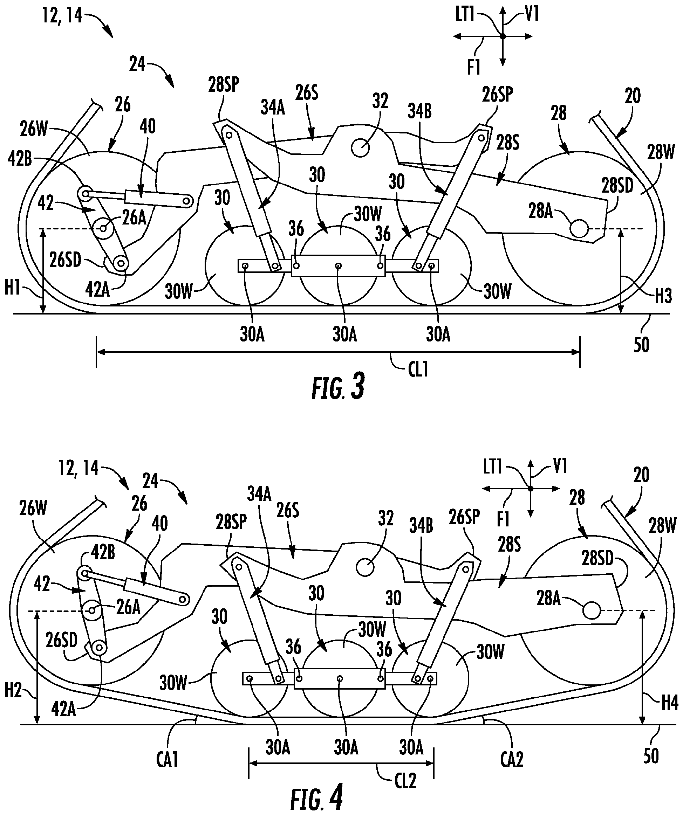

The idler wheel assemblies 26, 28 each further include a respective suspension arm for supporting the idler wheels 26W, 28W relative to the chassis 16. For instance, the front idler wheel assembly 26 includes a front suspension arm 26S for supporting the front idler wheels 26W relative to the chassis 16 and the rear idler wheel assembly 28 includes a rear suspension arm 28S for supporting the rear idler wheels 28W relative to the chassis 16. The suspension arms 26S, 28S are rotatably coupled to the chassis 16 about a rotational joint 32. The roller wheel assemblies 30 are supported relative to the chassis 16 by the suspension arms 26S, 28S. Particularly, suspension actuators (e.g., a first suspension actuator 34A and a second suspension actuator 34B) are coupled between the suspension arms 26S, 28S and the roller wheel assemblies 30 for supporting the roller wheel assemblies 30 relative to the chassis 16. The roller wheel assemblies 30 may generally be coupled together by pivot joints 36 (FIGS. 3 and 4) such that roller wheel assemblies 30 may pivot relative to each other. By the suspension actuators 34A, 34B and the pivot joints 36 (FIGS. 3 and 4), the roller wheel assemblies 30 may move independently of the suspension arms 26S, 28S, and thus independently of the idler wheels 26W, 28W.

Additionally, as will also be described in greater detail below, at least the front idler wheel assembly 26 may further include a tensioning actuator 40 that is actuatable to adjust a tension acting on the track 20, and thus, on the suspension assembly 34.

Referring now to FIGS. 3 and 4, schematic views of the suspension assembly 24 and track 20 of the track module 12, 14 shown in FIG. 2 are illustrated in accordance with aspects of the present subject matter. Particularly, FIG. 3 illustrates the suspension assembly 24 when a braking operation is not being performed, and FIG. 4 illustrates the suspension assembly 24 when a braking operation is being performed.

As shown in FIGS. 3 and 4, the suspension arms 26S, 28S extend between proximal ends 26SP, 28SP and distal ends 26SD, 28SD. The suspension arms 26S, 28S are rotatably coupled to the joint 32 near the proximal ends 26SP, 28SP. The idler wheels 26W, 28W (only one of each being shown) are rotatably coupled at the distal end 26SD, 28SD to the respective suspension arm 26S, 28S. Particularly, the front idler wheel 26W is coupled to the distal end 26SD of the front suspension arm 26S by a swing arm 42. The swing arm 42 extends between a first arm end 42A and a second arm end 42B. The first arm end 42A of the swing arm 42 is rotatably coupled to the distal end 26SD of the front suspension arm 26. The front idler wheel 26W is rotatably coupled to the swing arm 42 between the first and second arm ends 42A, 42B of the swing arm 42. In one embodiment, such as the embodiment shown, the tensioning actuator 40 is a cylinder (e.g., a hydraulic or pneumatic cylinder) coupled between the front suspension arm 26S and the second arm end 42B of the swing arm 42. As will be described below in greater detail, the track 20 does not flex or stretch. As such increasing and decreasing the pressure of the tensioning actuator 40 does not cause significant extension or retraction of the actuator 40. Instead, increasing the pressure of the tensioning actuator 40 increases the tension on the track 20 which, in turn, lifts the front idler wheel 26W and/or the rear idler wheel 28W relative to a driving surface 50. However, it should be appreciated that, in other embodiments, the tensioning actuator 40 may be otherwise positioned and/or may be configured as any other suitable actuator such that the tensioning actuator 40 is controllable to adjust (e.g., increase or decrease) the tension on the track 20. It should further be appreciated that the tensioning actuator 40 may instead be coupled to the rear suspension arm 28S, or an additional tensioning actuator may be coupled to the rear suspension arm 28S.

Typically, a constant down force is applied to the idler wheels 26W, 28W such that the track 20 directly below the lowest points on the idler wheels 26W, 28W along a vertical direction V1 is kept in engagement with the driving surface 50. Similarly, as indicated above, the roller wheels 30W independently follow the contour of the driving surface 50 such that the track 20 directly below the lowest points on the roller wheels 30W is kept in engagement with the driving surface 50. As such, as shown in FIG. 3, the track 20 continuously contacts the driving surface 50 at a contact patch area extending from the front idler wheel 26W, across the roller wheels 30W, to the rear idler wheel 28W. The contact patch area has a first contact length CL1 generally parallel to the front-rear direction of the work vehicle F 1 and equal to the length of track from the lowest point on front idler wheel 26W to the lowest point on the rear idler wheel 28W.

The down force on the idler wheels 26W, 28W is a function of the tension acting on the track 20 and the geometry of the suspension assembly 24. As such, changing the tension on the track 20 changes the down force on the forward and/or rear idler wheels 26W, 28W. For example, the pressure of the tensioning actuator 40 may be increased, which increases the tension on the track 20. As the tension on the track 20 increases, the downforce on the front idler wheels 26W and/or the rear idler wheels 28W by the track 20 is reduced and/or an upward force is applied on to the front idler wheels 26W and/or the rear idler wheels 28W by the track 20 such that the front and/or rear idler wheels 26W, 28W are lifted. When the pressure of the tensioning actuator 40 is subsequently decreased, the tension on the track 20 decreases, and the idler wheel(s) 26W, 28W are returned or lowered.

For instance, the front idler wheel 26W is at an initial vertical height H1 above the driving surface 50 when the track 20 is subject to the reduced tension (FIG. 3), and at a second vertical height H2 above the driving surface 50 when the track 20 is subject to the increased tension (FIG. 4), with the second vertical height H2 being higher than the initial vertical height H1 relative to the driving surface 50. Similarly, the rear idler wheel 28W is at a respective initial, vertical height H3 above the driving surface when the track 20 is subject to the reduced tension (FIG. 3), and at a respective, second vertical height H4 above the driving surface 50 when the track 20 is subject to the increased tension (FIG. 4), with the second vertical height H4 being higher above the driving surface 50 than the initial vertical height H3. It should be appreciated that the front and rear idler wheels 26W, 28W may be lifted by a same or different distance when the tension on the track 20 is increased from a lower tension to a higher tension. Particularly, during a braking operation, the front and rear idler wheels 26W, 28W may be lifted by a same distance when the tension on the track 20 is increased from a lower tension to a higher tension. It should also be appreciated that, on some embodiments, only one of the idler wheels 26W, 28W may lift.

Further, the suspension actuators 34A, 34B retract as the front and/or rear idler wheels 26W, 28W are raised and the associated suspension arms 26S, 28S pivot about the rotational joint 32. For instance, the suspension actuators 34A, 34B are at a first extension length in FIG. 3, when the tension on the track 20 is the lower tension, and at a reduced, second extension length in FIG. 4, when the tension on the track 20 is the higher tension.

When the front and/or rear idler wheels 26W, 28W are lifted, the contact patch area between the track 20 and the driving surface 50 is reduced. For instance, as shown in FIG. 4, the portion of the track 20 at the front idler wheel 26W forms an angle of attack CA1 with the driving surface 50 when the front idler wheel 26W is lifted, and the portion of the track 20 at the rear idler wheel 28W forms an angle of attack CA2 with the driving surface 50 when the rear idler wheel 28W is lifted, where at least one of the angles of attack CA1, CA2 is greater than when the idler wheels 26W, 28W are not lifted. As such, the remaining contact patch area has a second contact length CL2 when the front and/or rear idler wheels 26W, 28W are lifted, where the second contact length CL2 is less than the first contact length CL1. By reducing the contact patch area, a lateral force acting on the track 20 during a braking operation, particularly during a braking-and-steering operation, is reduced, which prevents lugs 20L (FIG. 2) on the track 20 from being pulled or unseated from between the pairs of idler wheels 26W, 28W and becoming damaged by the idler wheels 26W, 28W. Further, when the tension on the track 20 is increased, a larger lateral force may be required to pull or unseat the lugs 20L (FIG. 2) on the track 20 from between the pairs of idler wheels 26W, 28W. As such, damage of the lugs 20L is prevented by increasing the tension on the track 20 during a braking operation of the track module 12, 14.

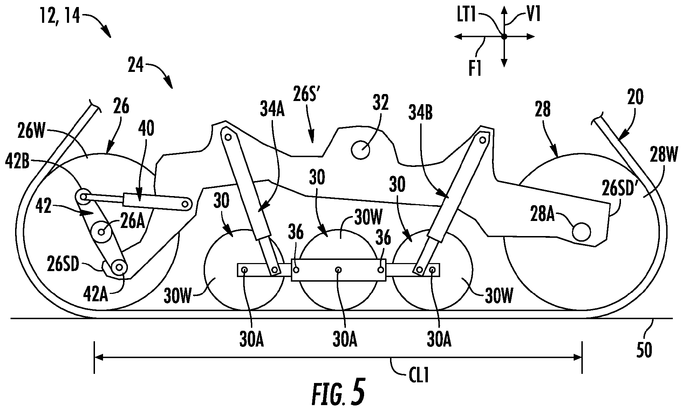

It should be appreciated that, instead of the suspended idler wheel assembly including the front and rear idler wheel assemblies 26, 28 shown in FIGS. 2-4, the track module(s) 12, 14 may include a non-suspended idler wheel assembly, such as the non-suspended idler wheel assembly 26' shown in FIG. 5. In the non-suspended idler wheel assembly 26', the front and rear idler wheels 26W, 28W are mounted to opposing ends of the same suspension arm 26' such that they are not rotatable about the rotational joint 32 independently of each other. For instance, the suspension beam 26S' extends between a first end 26SD and a second end 26SD' in the front-rear direction F1. The front idler wheel 26W is rotatably coupled to the first end 26SD of the suspension beam 26S' in a substantially similar way as the front idler wheel 26W is coupled to the first end 26SD of the suspension arm 26S in FIGS. 2-4. The rear idler wheel 28W is rotatably coupled to the second end 26SD' of the suspension arm 26' such that it is rotatable about the rear axis 28A. The suspension actuators 34A, 34B are coupled between the suspension beam 26S' and the roller wheel assemblies 30 for supporting the roller wheel assemblies 30 relative to the chassis 16. Similar to the suspended idler wheel assembly, increasing the tension applied by the tensioning actuator 40 on the track 20 will reduce the ability of the lugs to unseat from between the idler wheels 26W, 28W of the non-suspended idler wheel assembly 26'. However, unlike in the suspended idler wheel assembly configuration, when the tension of the tensioning actuator 40 is increased, the idler wheels 26W, 28W of the non-suspended idler wheel assembly 26' are not raised in the vertical direction V1, leaving the contact length CL1 the same with increased tension.

It should be appreciated that, in one embodiment, the tensioning actuator(s) 40 of the suspended and non-suspended idler wheel assemblies may be hydraulically coupled to a brake of the track module 12, 14 such that the tensioning actuator(s) 40 may automatically increase the tension on the track 20 (e.g. from a lower tension to a higher tension) when a braking operation to slow down the track module 12, 14 is initiated and automatically decrease the tension on the track 20 (e.g., from the higher tension to the lower tension) when the braking operation is ceased. In another embodiment, as will be described in greater detail below, the tensioning actuator(s) 40 may be controlled to selectively increase the tension on the track 20 (e.g., from a lower tension to a higher tension) in response to a determination that a braking operation is to be performed to slow down the track module 12, 14 and to selectively decrease the tension on the track 20 (e.g., from the higher tension to the lower tension) in response to a determination that the braking operation is to be ceased.

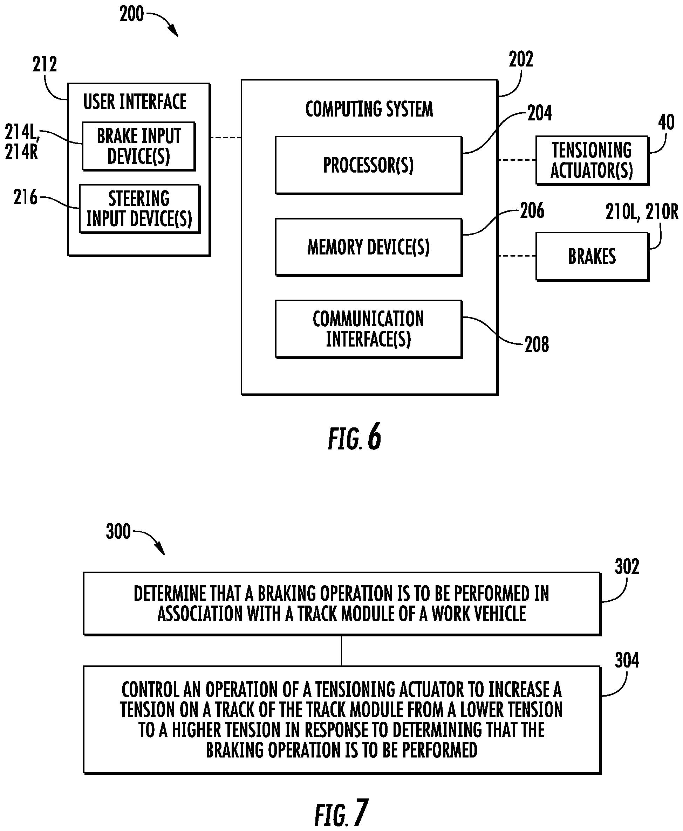

Referring now to FIG. 6, a schematic view of one embodiment of a system 200 for braking a track module of a work vehicle is illustrated in accordance with aspects of the present subject matter. In general, the system 200 will be described herein with reference to the work vehicle 10 described above with reference to FIG. 1 and the track module 12, 14 described above with reference to FIGS. 2-5. However, it should be appreciated that the disclosed system 200 may generally be utilized with work vehicles having any other suitable configuration and/or with track modules having any other suitable configuration consistent with the disclosure provided herein.

In several embodiments, the system 200 may include a computing system 202 and various components, features, systems and/or sub-systems configured to be communicatively coupled to the computing system 202. In general, the computing system 202 may be configured to perform various computer-related functions or tasks, including, for example, receiving data from one or more components, features, systems and/or sub-systems of the work vehicle 10 storing and/or processing data received or generated by the computing system 202, and/or controlling the operation of one or more components, features, systems and/or sub-systems of the work vehicle 10.

In general, the computing system 202 may correspond to any suitable processor-based device(s), such as a computing device or any combination of computing devices. Thus, as shown in FIG. 6, the computing system 202 may generally include one or more processor(s) 204 and associated memory devices 206 configured to perform a variety of computer-implemented functions (e.g., performing the methods, steps, and the like disclosed herein). As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device 206 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory device 206 may generally be configured to store information accessible to the processor(s) 204, including data that can be retrieved, manipulated, created and/or stored by the processor(s) 204 and instructions that can be executed by the processor(s) 204.

The computing system 202 may be configured to receive inputs from and/or control several components of the work vehicle 10. For instance, the computing system 202 may be communicatively coupled to brakes 210L, 210R, a user interface 212, and the tensioning actuator(s) 40. More particularly, in one embodiment, the work vehicle 10 may have differential braking which allows different braking forces to be applied to each side of the work vehicle 10 to help steer the vehicle 10. In such embodiment, the work vehicle 10 has a left-side brake 210L and a right-side brake 210R, where the brakes 210L, 210R are separately actuatable. In one embodiment, the user interface 212 includes a left-side brake input device 214L movable for selectively engaging a left-side brake 210L of the left-side track module(s) 12, 14, and a separate, right-side brake input device 214R movable for selectively engaging a right-side brake 210R of the right-side track module(s) 12, 14. In some embodiments, the brake input devices 214L, 214R are configured as hand levers, foot pedals, and/or the like, such that they are generally movable between a disengaged position, associated with the respective brake 210L, 210R being disengaged, and an engaged position, associated with the respective brake 210L, 210R being engaged. It should be appreciated that a single brake input device may instead be used for selectively engaging both brakes 210L, 210R. Additionally, it should be appreciated that the brakes 210L, 210R may otherwise be engaged. The computing system 202 may receive inputs from the brake input device(s) 214L, 214R associated with performing a braking operation with the brake(s) 210L, 210R to slow down track modules 12, 14 on one or both sides of the work vehicle 10. For instance, the brake input devices 214L, 214R may each include or otherwise be associated with a sensor, such as a displacement sensor, a rotational sensor, a pressure sensor, and/or the like, configured to generate data indicative of the position of brake input devices 214L, 214R between the engaged and disengaged positions.

In some embodiments, the user interface 210 alternatively, or additionally, includes one or more steering input devices 216, such as a steering wheel, hand levers, a joystick, and/or the like, movable for selectively steering the work vehicle 10. For instance, the steering input device(s) 216 may be associated with a steering angle actuator (not shown) for adjusting a steering angle or direction of the front track modules 12 and/or the rear track modules 14 relative to the front-rear direction F1 of the work vehicle 10. The computing system 202 may receive inputs from the steering input device(s) 216 indicative of a steering direction of the work vehicle 10, which, in turn, may be associated with performing a braking operation with the brake(s) 210L, 210R to slow down track modules 12, 14 on one side of the work vehicle 10, for example, when the steering direction is left or right. For instance, the steering input device(s) 216 may each include or otherwise be associated with a sensor, such as a displacement sensor, a rotational sensor, a pressure sensor, and/or the like, configured to generate data indicative of the position of the steering input device 216, which in turn is indicative of the steering direction of the work vehicle 10.

In some embodiments, the computing system 202 may be configured to control the tensioning actuator(s) 40 in response to inputs received from the brake input device(s) 214L, 214R and/or the steering input device(s) 216. For instance, as indicated above, it may be desirable to lift the idler wheel(s) 26W, 28W when the work vehicle 10 is being braked. Particularly, the computing system 202 may control an operation of the tensioning actuator(s) 40 of the track module(s) 12, 14 to be braked to increase a tension acting on the track 20 of such track module(s) 12, 14 from a lower tension to a higher tension. As indicated above, by increasing the tension on the track 20 of the track module(s) 12, 14 to be braked, the associated idler wheel(s) 26W, 28W is raised such that the contact patch between the track 20 and the driving surface 50 is reduced, which reduces lateral force on the track 20 to prevent damage of the lugs 20L of the track 20. Additionally, by increasing the tension on the track 20, the lugs 20L are generally less likely to become unseated from between idler wheel pairs 26W, 28W.

In one embodiment, it may be desirable to lift the idler wheel(s) 26W, 28W when a steering-while-braking operation is to be performed. The computing system 202 may determine that a steering-while-braking operation is to be performed with only the left-side or the right-side track module(s) 12, 14, when the computing system 202 receives an input from only one of the left-side or right-side brake input devices 214L, 214R and/or an input from the steering input device(s) 216 indicative of steering the work vehicle 10 left or right. In response to determining that a steering-while-braking operation is to be performed, the computing system 202 controls an operation of the tensioning actuator(s) 40 associated with only the left-side or the right side track module(s) 12, 14 to be braked.

In one embodiment, it may be desirable to lift the idler wheel(s) 26W, 28W when the magnitude of a braking operation is equal to or higher than a threshold braking force. For instance, the computing system 202 may be further configured to compare a magnitude of a braking force for a braking operation with the brake(s) 210L, 210R to a threshold braking force. The threshold braking force may be predetermined and stored within the memory 206 of the computing system 202 or may otherwise be determined. The magnitude of the braking force may be determined based at least in part on an input from the brake input device(s) 214L, 214R indicative of a magnitude of a change in position of the brake input device(s) 214L, 214R and/or an input from the steering input device(s) 216 indicative of a magnitude of a change in position of the steering input device(s) 216. The computing system 202 may be configured to determine that a braking operation is to be performed when the magnitude of the braking force is greater than or equal to the threshold braking force. Thereafter, the computing system 202 may control the operation of the tensioning actuator(s) 40 to increase the tension on the track(s) 20 of the track module(s) 12, 14 to be braked. By only lifting the idler wheel(s) 26W, 28W when the magnitude of the braking force is greater than or equal to the threshold braking force, wear on the tensioning actuator(s) 40 may be reduced.

In a further embodiment, the actuation of the tensioning actuator(s) 40 may take place when a lug protection mode is enabled. For instance, an operator of the work vehicle 10 may selectively enable the lug protection mode via the user interface 212. For example, depending on the driving conditions, such as a field being wet or muddy, it may be desirable to allow the tensioning actuator(s) 40 to be operated as described above to help prevent the lugs 20L of the track 20 from being unseated. Whereas, during more favorable driving conditions, such as a dry field and/or lower speeds, it may be less necessary to allow the tensioning actuator(s) 40 to be operated as described above.

It should be appreciated that the computing system 202 may otherwise be configured to determine that a braking operation is to be performed with one or both of the left-side and the right-side track module(s) 12, 14. For instance, in one embodiment, the computing system 202 may be configured to automatically guide the work vehicle 10 across the driving surface 50. As such, the computing system 202 may be configured to generate instructions for controlling the brakes 210L, 210R to reduce the ground speed of the work vehicle 10 and/or to help steer the work vehicle 10 across the driving surface 50. The instructions for controlling the brakes 210L, 210R may, for example, be generated based at least in part on a current map of the worksite, a current ground speed of the work vehicle 10, a width of the work vehicle 10 and/or associated implement, and/or the like. Thus, the computing system 202 may determine that a braking operation is to be performed with one or both of the left-side and the right-side track module(s) 12, 14 without receiving inputs from the braking and/or steering input device(s) 214L, 214R, 216.

In one embodiment, the computing system 202 may further be configured to control an operation of the left-side brake(s) 210L and/or the right-side brake(s) 210R to slow down the associated track module(s) 12, 14 in response to determining that a braking operation is to be performed. Preferably, in one embodiment, the computing system 202 controls the operation of the tensioning actuator(s) 40 to increase the tension on the track 20 before or as the computing system 202 controls the operation of the brake(s) 210L, 210R to perform the braking operation(s) such that lateral force on the track 20 is further limited.

Referring now to FIG. 7, a flow diagram of one embodiment of a method 300 for braking a track module of a work vehicle is illustrated in accordance with aspects of the present subject matter. In general, the method 300 will be described herein with reference to the work vehicle 10 described above with reference to FIG. 1, the track module(s) 12, 14 described above with reference to FIGS. 2-5, and the system 200 described above with reference to FIG. 6. However, it should be appreciated that the disclosed method 300 may be implemented with work vehicles having any other suitable vehicle configuration, with track modules having any other suitable track module configuration, and/or with systems having any other suitable system configuration. In addition, although FIG. 7 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown in FIG. 7, at (302), the method 300 may include determining that a braking operation is to be performed to in association with a track module of a work vehicle. For instance, as described above, the computing system 202 may determine that a braking operation is to be performed in association with the track module 12, 14 of the work vehicle 10 (e.g., to slow down the track module 12, 14) based on inputs received that are associated with a braking-only operation or a braking-while-steering operation.

Additionally, at (304), the method 300 may include controlling an operation of a tensioning actuator of the track module to increase a tension on the track from a lower tension to a higher tension in response to determining that the braking operation is to be performed. For example, as discussed above, the computing system 202 may control an operation of the tensioning actuator(s) 40 of the track module(s) 12, 14 to increase the tension on the track 20 from a lower tension to a higher tension in response to determining that the braking operation is to be performed.

It is to be understood that the steps of the method 300 are performed by the computing system 200 upon loading and executing software code or instructions which are tangibly stored on a tangible computer readable medium, such as on a magnetic medium, e.g., a computer hard drive, an optical medium, e.g., an optical disk, solid-state memory, e.g., flash memory, or other storage media known in the art. Thus, any of the functionality performed by the computing system 200 described herein, such as the method 300, is implemented in software code or instructions which are tangibly stored on a tangible computer readable medium. The computing system 200 loads the software code or instructions via a direct interface with the computer readable medium or via a wired and/or wireless network. Upon loading and executing such software code or instructions by the computing system 200, the computing system 200 may perform any of the functionality of the computing system 200 described herein, including any steps of the method 300 described herein.

## Claims

1. A system (200) for braking a track module (12, 14) of a work vehicle (10), the system (200) comprising a frame (16) and a track module (12, 14) supported relative to the frame (16), the track module (12, 14) comprising an idler wheel assembly (26, 28) including an idler wheel (26W, 28W), the track module (12, 14) further comprising a roller wheel assembly (30) suspended relative to the frame (16), the roller wheel assembly (30) including a plurality of roller wheels (30W), the track module (12, 14) further comprising a track (20) extending in an endless loop around the idler wheel (26W, 28W) and the plurality of roller wheels (30W), and a tensioning actuator (40) configured to adjust a tension on the track (20), the system (200) being **characterized in that**:
the tensioning actuator (40) increases the tension on the track (20) from a lower tension to a higher tension when a braking operation in association with the track module (12, 14) is initiated and subsequently reduces the tension on the track (20) from the higher tension to the lower tension when the braking operation is ceased.

2. The system (200) as in claim 1, being **characterized in that** the idler wheel assembly (26, 28) further includes a suspension arm (26S, 28S, 26S'), the idler wheel (26W, 28W) being coupled to the suspension arm (26S, 28S, 26S'),
wherein the idler wheel (26W, 28W) is at a first height (H1, H2) above a driving surface (50) when the tension on the track (20) is the lower tension and at a second height (H3, H4) above the driving surface (50) when the tension on the track (20) is the higher tension, the second height (H3, H4) being greater than the first height (H1, H2).

3. The system (200) as in claim 1, being **characterized in that** the idler wheel is a first idler wheel (26W), wherein the idler wheel assembly (26, 28) further includes a first suspension arm (26S), a second idler wheel (28W), and a second suspension arm (28S), the first idler wheel (26W) being coupled to the first suspension arm (26S), the second idler wheel (28W) being coupled to the second suspension arm (28S), the first and second idler wheels (26W, 28W) being spaced apart along a front-rear direction (F1) of the work vehicle (10), and
at least the first idler wheel (26W) is at a first height (H1) above a driving surface (50) when the tension on the track (20) is the lower tension and at a second height (H3) above the driving surface (50) when the tension on the track (20) is the higher tension, the second height (H3) being greater than the first height (H1).

4. The system (200) as in claim 3, being **characterized in that** the first idler wheel is a front idler wheel (26W), the front idler wheel (26W) being forward of the plurality of roller wheels (30W) along the front-rear direction (F1) of the work vehicle (10), and
the second idler wheel is a rear idler wheel (28W), the rear idler wheel (28W) being rearward of the plurality of roller wheels (30W) along the front-rear direction (F1) of the work vehicle (10).

5. The system (200) as in any preceding claim, being further **characterized by** a computing system (202) communicatively coupled to the tensioning actuator (40), the computing system (202) being configured to:
determine that the braking operation is to be performed,
control an operation of the tensioning actuator (40) to increase the tension on the track (20) from the lower tension to the higher tension in response to determining that the braking operation is to be performed,
determine that the braking operation is to be ceased, and
control the operation of the tensioning actuator (40) to decrease the tension on the track (20) from the higher tension to the lower tension in response to determining that the braking operation is to be ceased.

6. The system (200) as in claim 5, being further **characterized by** a brake (210L, 210R) configured to slow down the track module (12, 14) and a brake input device (214L, 214R) movable for selectively engaging the brake (210L, 210R),
wherein the computing system (202) is communicatively coupled to the brake input device (214L, 214R), the computing system (202) being configured to determine that the braking operation is to be performed or ceased when an input is received from the brake input device (214L, 214R).

7. The system (200) as in any preceding claim, being further **characterized by** a steering input device (216) movable to steer the work vehicle (10),
wherein the computing system (202) is communicatively coupled to the steering input device (216), the computing system (202) being configured to determine that the braking operation is to be performed when an input is received from the steering input device (216) that is associated with steering the work vehicle (10).

8. The system (200) as in claim 1, being **characterized in that** the idler wheel is a first idler wheel (26W) and that the idler wheel assembly (26, 28) further includes a second idler wheel (28W), the first and second idler wheels (26W, 28W) being coupled to a suspension beam (26S') and being spaced apart along a front-rear direction (F1) of the work vehicle (10).

9. A method (300) for braking a track module (12, 14) of a work vehicle (10), the track module (12, 14) comprising an idler wheel (26W, 28W), the track module (12, 14) further comprising a roller wheel assembly (30) including a plurality of roller wheels (30W), the track module (12, 14) further comprising a track (20) extending in an endless loop around the idler wheel (26W, 28W) and the plurality of roller wheels (30W), the method (300) being **characterized by**:
determining, with a computing system (202), that a braking operation is to be performed in association with the track module (12, 14); and
controlling, with the computing system (202), an operation of a tensioning actuator (40) of the track module (12, 14) to increase a tension on the track (20) from a lower tension to a higher tension in response to determining that the braking operation is to be performed.

10. The method (300) as in claim 9, wherein the work vehicle (10) is further **characterized by** a brake (210L, 210R) configured to slow down the track module (12, 14) and a brake input device (214L, 214R) movable for selectively engaging the brake (210L, 210R),
wherein determining that the braking operation is to be performed to slow down the track module (12, 14) comprises receiving, with the computing system (202), an input from the brake input device (214L, 214R) that is associated with engaging the brake (210L, 210R).

11. The method (300) as in any preceding claim, wherein the work vehicle (10) is further **characterized by** a steering input device (216) movable to steer the work vehicle (10),
wherein determining that the braking operation is to be performed to slow down the track module (12, 14) comprises receiving, with the computing system (202), an input from the steering input device (216) that is associated with steering the work vehicle (10).

12. The method (300) as in any preceding claim, being **characterized in that** the track module (12, 14) is one of a left-side track module (12, 14) or a right-side track module (12, 14),
wherein determining that the braking operation is to be performed to slow down the track module (12, 14) comprises receiving an input that is associated with slowing down only the one of the left-side track module (12, 14) or the right-side track module (12, 14).

13. The method (300) as in any preceding claim, being **characterized in that** determining that the braking operation is to be performed comprises receiving an input indicative of a magnitude of a braking force for the braking operation,
the method (300) being further **characterized by** comparing, with the computing system (202), the magnitude of the braking force for the braking operation to a threshold braking force,
wherein controlling the operation of the tensioning actuator (40) comprises controlling the operation of the tensioning actuator (40) to increase the tension on the track (20) from the lower tension to the higher tension when the magnitude of the braking force is greater than or equal to the threshold braking force.

14. The method (300) as in any preceding claim, being further **characterized by** controlling, with the computing system (202), an operation of a brake (210L, 210R) to slow down the track module (12, 14) in response to determining that the braking operation is to be performed.

15. The method (300) as in claim 14, being **characterized in that** controlling the operation of the brake (210L, 210R) to slow down the track module (12, 14) comprises controlling the operation of the brake (210L, 210R) to slow down the track module (12, 14) after controlling the operation of the tensioning actuator (40) of the track module (12, 14) to increase the tension on the track (20).
